# EUROPEAN PATENT APPLICATION

(11) **EP 1 560 322 A1**
(43) Date of publication of application: **03.08.2005**
(21) Application number: 04001673.5
(22) Date of filing: 27.01.2004
(51) Int. Cl.: H02M 3/158, H02J 1/10

(54) **Method for actuating a switch in a transformer stage of a multiphase DC voltage transformer, and the multiphase DC voltage transformer**

(71) Applicant: Infineon Technologies AG, 81809 München (DE)
(72) Inventor: Bernacchia, Giuseppe, 35129 Padova (IT); Capodivacca, Giovanni, 35128 Padova (IT); Chiozzi, Giorgio, 35100 Padova (IT)
(74) Representative: Patentanwälte Westphal, Mussgnug & Partner

(57) **Abstract**

A method is provided for actuating a switch (SW; T1) regulating the current uptake in one of at least two parallel switch transformer stages (3, 3_1, 3_n) of a multiphase DC voltage transformer, which has an output terminal for connecting a load and producing an output voltage (Vout) from an input voltage (Vin), wherein the method comprises the following steps:
- providing a first control signal (S1), dependent on the output voltage (Vout),
- providing a current metering signal (S4) at least temporarily dependent on an output current (Iout) of the transformer stage (3),
- providing a clocked actuation signal (S3) having a sequence of actuation pulses for the at least one switch (SW; T1), whose duty cycle is controlled to a value depending on the first control signal (S1) and the current metering signal (S4), at which the mean value of the output current (Iout) is proportional to the first control signal (S1).

## Description

The present invention relates to a method for actuating a switch in a transformer stage of a multiphase DC voltage transformer (or multiphase DC to DC converter) and a multiphase DC voltage transformer. Such DC voltage transformers contain several individual transformer stages, which are switched in parallel with the voltage or current source of a load.

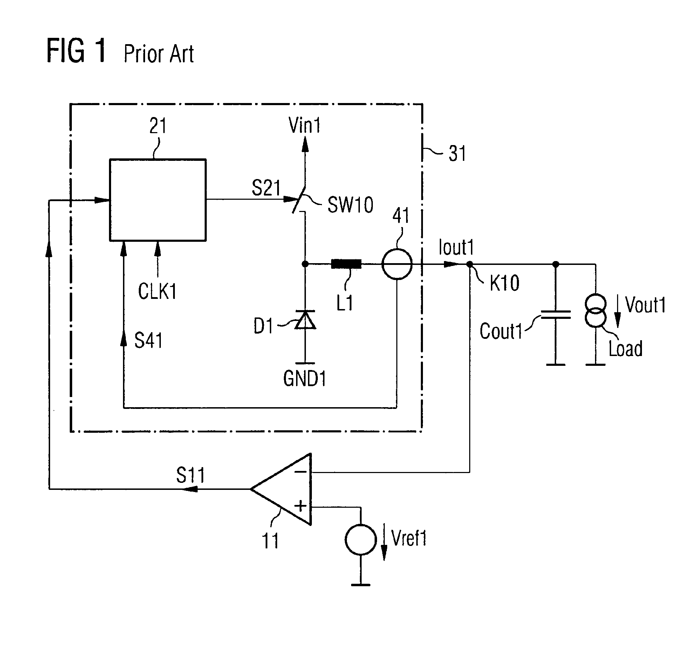

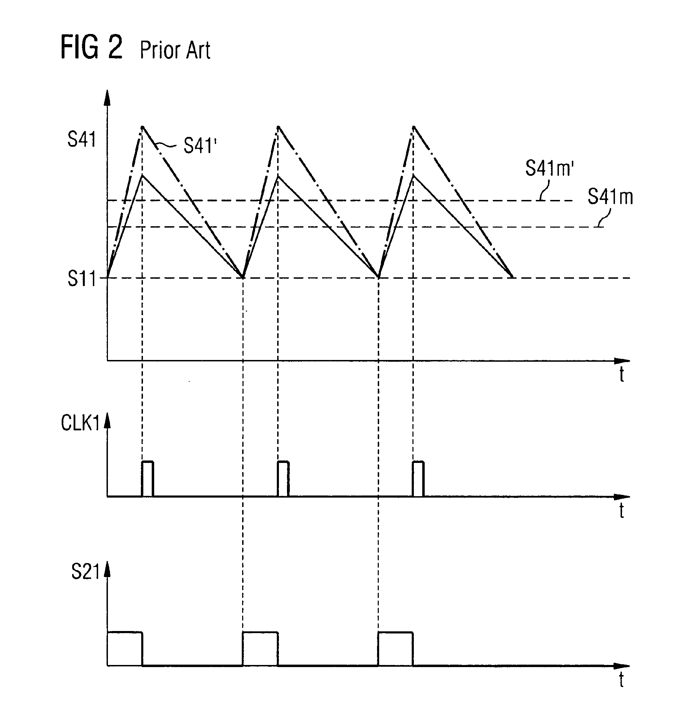

For a better understanding of the invention explained hereafter, the basic layout and the fundamental mode of operation of a sufficiently well-known transformer stage, configured as a stepdown transformer, will be explained hereinbelow with reference to Figures 1 and 2.

The transformer stage 31 puts out across an output terminal K10 an output current Iout1 to a rectifying capacitor Cout1 and a load switched in parallel with the capacitor Cout1. In order to regulate the output voltage Vout1 in terms of the load, an automatic controller 11 produces a control signal S11 from the difference between the output voltage Vout1, or a signal dependent thereon, and a reference signal Vref1. For this purpose, the controller 11 is designed for example as an integral controller or a proportional-integral controller. The control signal S11 is fed to an actuator unit 21 in the transformer stage 31, which provides an actuating signal S21 for a switch SW10, which is connected in series with an inductive storage element L1 between one terminal for an input voltage Vin1 and the output terminal K10. A diode D1 connected between a reference potential GND1 and the coil L1 serves as a free-wheeling element for the inductive storage element L1 when the switch SW10 is open.

The actuating circuit 21 is fed a current metering signal S41, which is proportional to the output current Iout1, and a clock signal CLK1, in addition to the voltage control signal S11.

The mode of operation of the actuator circuit 21 in providing the actuation signal S21 is made clear by the signal diagram of Figure 2, wherein the representation of Figure 2 assumes that the switch SW10 is closed, or conducting, when the actuator signal S21 is high-level, and open, or blocked, when this actuator signal S21 is low-level.

When the switch SW10 is operated to be conducting, the output current Iout1 rises linearly across the inductance L1, and the rise in this current is dependent on the difference between the input voltage Vin1 and the output voltage Vout1 and the inductivity value of the inductance L1. When the switch SW10 is then opened, this output current Iout1 decreases linearly. The duration of the individual turn-on pulses or the duty cycle of the actuator signal S21 is dependent on the voltage control signal S11, in order to achieve control of the output voltage Vout1 via the voltage control signal S11. The switch SW10, for example, is opened in the clock pulse of the clock signal CLK1 and then closed whenever the current metering signal S41 has decreased to the value of the first control signal S11. The mean current delivery with this method is proportional to the mean value S41m of the current metering signal S41, while in the steady-state condition this mean value S41m corresponds to the voltage control signal S11 plus an offset. This offset corresponds, for the triangular current operation shown, to half of the signal deviation of the current metering signal S41.

If, in the transformer stage shown, the power uptake of the load drops, the output voltage Vout1 will rise while the control signal S11 initially stays the same, so that the control signal S11 is subsequently decreased via the controller 11. This leads to a decrease in the mean current uptake, and thus a reduced power delivery and a decrease in the output voltage, in order to control the output voltage back to the nominal value.

In multiphase DC voltage transformers, a voltage controller is available, corresponding to the voltage controller 11 in Figure 1, and its control signal is provided to the individual transformer stages.

However, in such multiphase DC voltage transformers, which are used for example to supply current to the CPUs of computers, a mere parallel switching of several transformer units of the type depicted in Figure 1, and designated therein by reference character 31, is not enough, but rather additional steps need to be taken to assure a uniform current loading of the individual transformer stages. As already explained, for the transformer stage depicted in Figure 1 the steepness of the slopes of the current diagram is dependent on the inductivity value of the inductive components used.
Figure 2 shows, as a dashed line, the current metering signal S41' for the same actuation signal S21 for the switch, but when using a coil with an inductivity value that results in steeper slopes for the current diagram. As a result, for the same actuation signal S21, there is a higher mean current uptake S41m'.

In order to obtain a uniform current load of the individual transformer stages, controlling the current delivery in the individual transformer stages, in addition to the output voltage, with the goal of achieving a uniform current loading of all transformer stages, is known. In one known design, the overall output current of the multiphase transformer and the number of transformer stages switched in parallel is used to determine an average output current and this is compared with the particular output currents of the individual transformer stages. If the output current of a transformer stage is greater than this average current, then the duty cycle of the actuation signal is decreased in this transformer stage in order to reduce the current delivery of this transformer stage. If the current delivery of a transformer stage is too small compared to the average current, then the duty cycle of the particular transformer stage is increased.

Another known method of current regulation functions by the master-slave principle. In this technique, one transformer stage is defined as the reference stage (master), whose output current serves as the reference current for the other transformer stages(slaves). The duty cycle of the actuation signals in the other transformer stages is then adjusted so that the output currents of these transformer stages correspond to the reference current. Such a concept is described, for example, in DE 101 12 039 A1.

Other multiphase DC voltage transformers are described in US 5,157,269, EP 01 79 508 A2 or GB 20 12 501 A.

The goal of the present invention is to provide a method for actuating a switch in a transformer stage of a multiphase DC voltage transformer and a multiphase DC voltage transformer in which a uniform current loading of the individual transformer stages is ensured.

This goal is achieved by a method according to Claim 1 and by a multiphase DC voltage transformer according to Claim 7. Advantageous embodiments of the method and of the multiphase DC voltage transformer are the subjects of respective subclaims.

The method involves the actuation of a switch which controls the current uptake in one of at least two parallel switched transformer stages of a multiphase DC voltage transformer, which has an output terminal for connecting a load and for making available an output voltage for the load from an input voltage. The method involves providing a first control signal, which is dependent on the output voltage, as well as a current metering signal which is at least temporarily dependent on an output current of the transformer stage, and providing from the first control signal and the current metering signal an actuation signal having a sequence of actuation pulses, whose duty cycle depending on the first control signal and the current metering signal is automatically controlled to a value at which the mean value of the output current is proportional to the first control signal.

Advantageously, the duty cycle of the actuation signal is controlled, depending on the first control signal and the current metering signal, to a value at which the mean value of the current control signal corresponds to the first control signal.

The control of the current uptake of the individual transformer stages of a multiphase DC voltage transformer is thus, in this method, dependent on the first control signal that regulates the output voltage, and by regulating the mean value of the output current in proportion to the first control signal one ensures that the individual transformer stages contribute an identical amount to the overall current, regardless of manufacturing-related variances in the inductivity values of the inductive storage elements, and the resulting different steepnesses of the slopes of the output current diagram. The proportionality factor between the first control signal and the mean value of the output current is the same for all transformer stages, so as to achieve an identical current loading of the transformer stages.

The multiphase DC voltage transformer according to the invention contains an output terminal for furnishing an output voltage from an input voltage, a first controller for furnishing a first control signal dependent on the output voltage, and at least two transformer stages. The transformer stages each contain an inductive energy storage element coupled to the output terminal, a switch which controls the current uptake of the inductive energy storage element and which is actuated in accordance with an actuation signal, and a current metering arrangement to furnish a current metering signal dependent on an output current. The individual transformer stages, furthermore, each contain an actuation circuit, which receives the first control signal and the current metering signal and furnishes the actuation signal for the at least one switch, wherein the actuation circuit controls the duty cycle of the actuation signal to a value at which the mean value of the output current is proportional to the first control signal.

Preferably, the actuation circuit is designed to control the duty cycle of the actuation signal to a value at which the mean value of the current metering signal corresponds to the first control signal.

The actuation circuit contains, for example, a pulse width modulator, to which the current metering signal and a difference signal formed from the first control signal and a second control signal are sent, a second control arrangement, to which the first control signal and the current metering signal are sent, and which furnishes the second control signal, and a subtractor, which furnishes the diffference signal from the first control signal and the second control signal. The present invention is explained in greater detail herebelow in sample embodiments with reference to figures.
- Figure 1: shows a DC voltage transformer according to the prior art, designed as a stepdown device.
- Figure 2: shows time diagrams of selected signals of the DC voltage transformer presented in Figure 1.
- Figure 3: shows a multiphase DC voltage transformer with a first controller arrangement to furnish a first control signal and with several transformer stages connected in parallel to an output terminal.
- Figure 4: shows a sample embodiment of a transformer stage of the multiphase DC voltage transformer with a switch regulating the power or current uptake and an actuation circuit for the switch, containing a second controller arrangement.
- Figure 5: provides time diagrams of a current metering signal, dependent on an output current, of the transformer stage depicted in Figure 4 for inductive storage elements with different inductivity values.
- Figure 6: shows a first sample embodiment of the second controller arrangement (Figure 6a) and illustrates the mode of operation of this controller arrangement by means of time diagrams of selected signals (Figure 6b).
- Figure 7: illustrates a second sample embodiment of the second controller arrangement (Figure 7a) and illustrates the mode of operation of this controller arrangement by means of time diagrams of selected signals (Figure 7b).
- Figure 8: shows a second sample embodiment of the second controller arrangement.
- Figure 9: shows an additional circuitry example for the transformer stages of the multiphase DC voltage transformer.

In the figures, unless otherwise indicated, the same reference characters designate the same circuit components and the same signals with the same meaning.

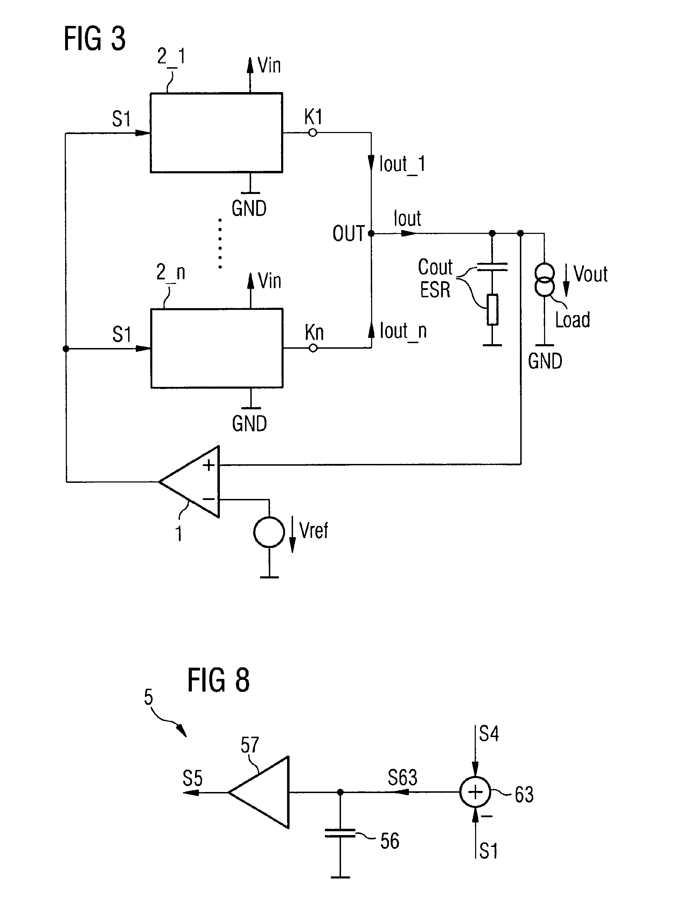

Figure 3 shows a multiphase DC voltage transformer, which has an output terminal OUT to furnish an at least approximately load-independent output voltage Vout for a load that can be connected to the output terminal OUT. An output capacitor Cout switched in parallel with the load is used to smooth the furnished output voltage Vout. The controlling of the output voltage Vout is effected in terms of the output current Iout delivered across the multiphase DC voltage transformer. The DC voltage transformer contains several transformer stages 2_1, 2_n (in the present case, two), each of which is furnished an input voltage Vin, and each having outputs K1, Kn connected to the output terminal OUT, at each of which is furnished a partial current Iout_1, Iout_n of the overall current Iout.

For controlling the output voltage Vout via the output current Iout or the partial currents Iout_1, Iout_n of the individual transformer stages 2_1, 2_n there is provided a first controller 1, which compares the output voltage Vout or a metering signal dependent thereon with a reference value Vref and which furnishes a first control signal S1, which is fed to the individual transformer stages 2_1, 2_n. The controller 1 is configured, for example, as a conventional proportional-integral controller or as an integral controller. The reference voltage Vref assigns the nominal value to which the output voltage Vout is regulated.

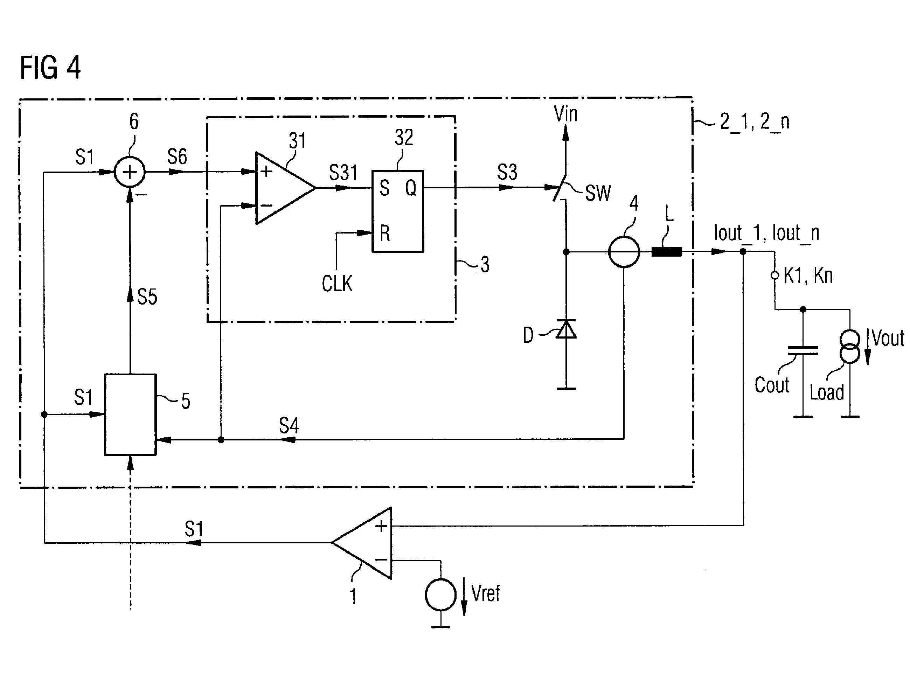

The individual transformer stages 2_1, 2_n are constructed in identical fashion. Figure 4 shows a circuitry sample embodiment for the individual transformer stages 2_1, 2_n. For a better understanding of the mode of operation of the transformer stages 2_1, 2_n, Figure 4 shows the load, the output capacitor Cout, and the controller 1 which furnishes the first control signal S1, in addition to the transformer stage.

The transformer stage of Figure 4 is designed as a stepdown device, which has a series circuit of a switch SW and an inductive storage element L between a terminal for the input voltage Vin and the output terminal K1, Kn of the transformer stage 2_1, 2_n. The load in the sample embodiment is switched between the output terminal K1, Kn and the reference potential GND. Between this reference potential GND and a junction shared by the switch SW and the inductance L there is switched a free-wheeling element, in the present case a diode D, which takes over the current through the inductance L when the switch SW is blocked.

The transformer stage 2 contains a current metering arrangement 4 for detecting the output current Iout and for furnishing a current metering signal S4 proportional to this output current Iout.

The switch SW is clocked according to an actuation signal S3 furnished by an actuation circuit. This actuation circuit is configured so as to control the duty cycle of the actuation signal S3 to a value at which the mean value of the output current Iout is proportional to the first control signal S1 or at which a mean value of the current metering signal S4 corresponds to the first control signal S1.

For this purpose, the actuation circuit contains a pulse width modulator 3, to whose output the actuation signal S3 is furnished, and to which the current metering signal S4 as well as a difference signal S6 from the first control signal S1 and a second control signal S5 is furnished. The difference signal S6 is furnished at the output of a subtractor 6, to which the first control signal S1 and the second control signal S5 are furnished.

The second control signal S5 is furnished at the output of a second controller arrangement 5, to which the first control signal S1 and the current metering signal S4 are furnished.

The pulse width modulator 3 shown in Figure 4 is designed to open the switch SW, timed by a clock signal CLK, and then to close it when the current metering signal S4 has dropped to the value of the difference signal S6. For this, the pulse width modulator 3 contains a comparator 31, to one input of which is supplied the difference signal S6 and to its other input the current metering signal S4. A comparator output signal S31 is supplied to a set input of an RS flip-flop 32, at whose non-inverting output Q the actuation signal S3 for the switch SW is provided. The clock signal CLK is furnished to the reset input of this flip-flop 32, in order to open the switch SW in time with this clock signal CLK.

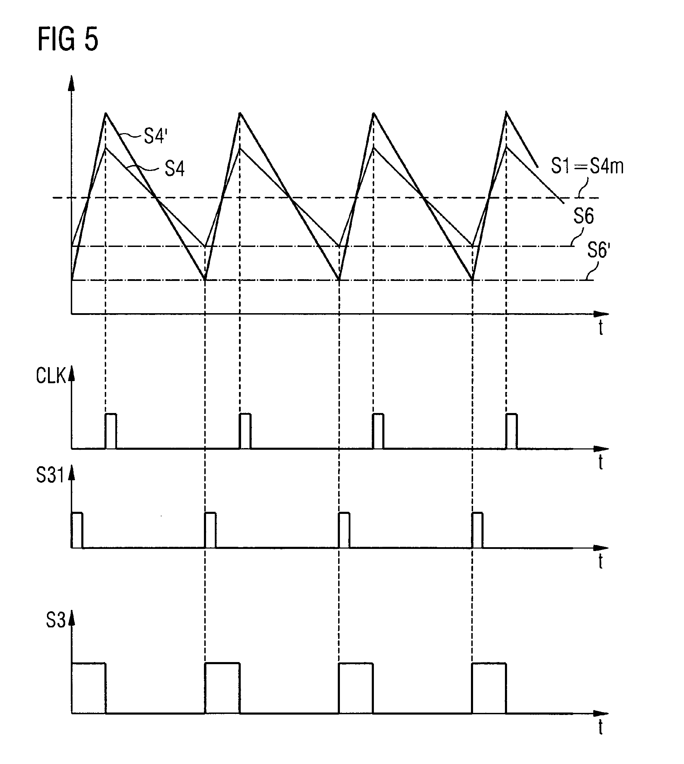

Figure 5 illustrates, as an example, the diagram of the current metering signal S4, which is proportional to the output current Iout, as a function of the clock signal CLK and the comparator output signal S31 or the difference signal S6. When the switch SW is closed after a rising edge of the comparator output signal S31, the output current Iout and, with it, the current metering signal S4, rises linearly until the switch SW timed by the clock signal CLK is turned off. The output current Iout or the current metering signal S4 then decreases linearly until the current metering signal S4 reaches the value of the difference signal S6, again turning the switch SW on. Overall, the current diagram is triangular in shape.

In order to regulate the mean value of the current metering signal S4 to the value of the first control signal S1, the first control signal S1 and the current metering signal S4 are compared with each other in the second control arrangement 5, and the second control signal S5 is increased, in order to reduce the reference signal S6, until such time as the first control signal S1 is smaller than the mean value of the current metering signal S4. Figure 5 shows the time diagram of the current metering signal S4 in the final regulated state, when the mean value of the current metering signal S4 thus corresponds to the first control signal S1. The difference signal S6 then lies below the first control signal S1 by an amount which corresponds to half the deviation in the level of the current metering signal S4.

In the method according to the invention, the mean value of the current metering signal S4 is automatically controlled to the value of the first control signal S1, regardless of the inductivity values of the inductances L used in the individual transformer stages and regardless of the different input voltages Vin of the individual transformer stages, if so desired. In Figure 5, S4' represents the time course of the current metering signal for a changed inductivity value and/or a changed input voltage Vin. The deviation in level of the current metering signal S4' in this case is greater than that of the already discussed current metering signal S4, from which the second control arrangement 5 produces a difference signal S6' which is smaller than the difference signal S6, but which likewise makes the mean value of the current metering signal S4' correspond to the first control signal S1.

As long as the current metering signals in all the transformer stages are produced in the same way with the same proportionality factor in relation to the output current Iout_1, Iout_n of the respective transformer stage, the method of the invention assures - when the duty cycle of the actuation signal S3 is adjusted so that the mean value of the current metering signal corresponds to the first control signal S1 - that all the transformer stages contribute the same partial currents to the output current. In this method, other than the first control signal S1, which is present in any case, and the current metering signal S4 produced in the transformer stages, no other signals need be furnished to the individual transformer stages.

In particular, the possibility exists of operating the individual transformer stages like traditional DC voltage transformers during the startup phase of the multiphase DC voltage transformer, and also for a predetermined time after the startup, without adjusting a uniform current delivery. For this purpose, the second automatic control arrangement 5 can be deactivated in the beginning, for example. The beginning of the actuation pulse of the actuation signal S3 then occurs as a function of the current metering signal S4 and the first control signal S1, which in this case is at first identical to the difference signal S6. If the control arrangement 5 is then turned on, the difference signal S6 will be decreased until the mean value of the current metering signal S4 corresponds to the first control signal S1. Decreasing the difference signal S6 will produce (referring to Figure 5) a decrease in the mean current uptake, which is opposed by way of an increase in the first control signal S1.

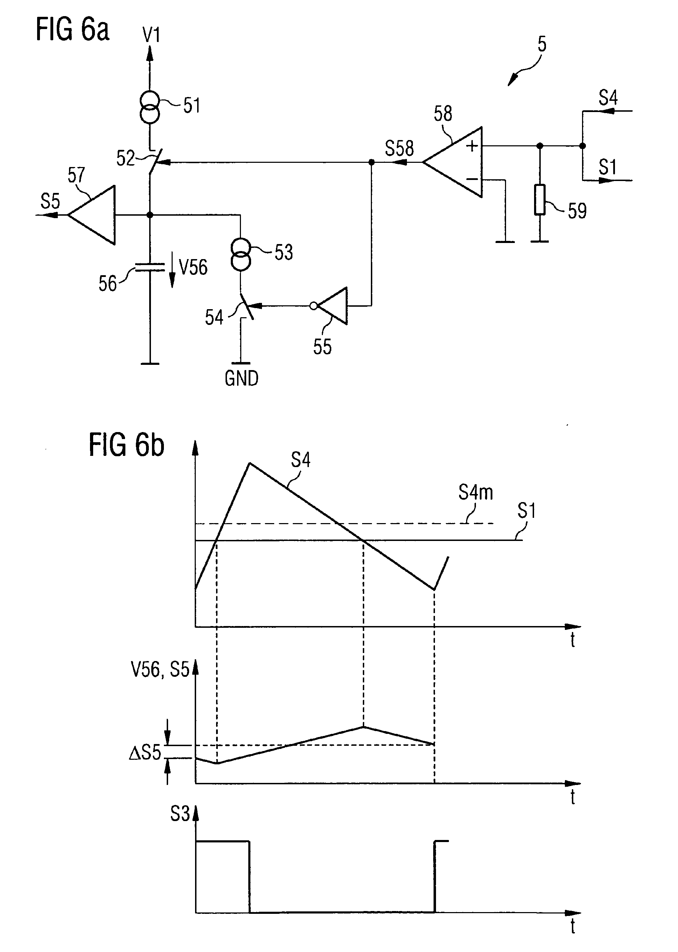

A sample embodiment of a second control arrangement 5 is shown in Figure 6a. The control arrangement has as its integrating element 56 a capacitor, to which is connected a charging circuit 51, 52 as well as a discharging circuit 53, 54. The charging circuit, in the sample embodiment, comprises a series connection of a current source 51 and a switch 52 between a power supply potential V1 and a lead of the capacitor 56 opposite the reference potential GND. The discharging circuit comprises a series connection of a second current source 53 and a second switch 54 between reference potential GND and the lead of the capacitor 56 opposite the reference potential GND. The charging and discharging circuits are actuated in complementary fashion to each other as determined by a comparison signal S58. The comparison signal S58 is furnished directly to the switch 52 of the charging circuit 51, 52 and across an inverter 55 to the switch 54 of the discharging circuit 53, 54. The comparison signal S58 is produced by means of a comparator 58 from the first control signal S1 and the current metering signal S4. For the diagram in Figure 6a, it is assumed that these signals S1, S4 are current signals, and these current signals with different sign are impressed on a circuit branch point, which is connected across a resistor 59 to reference potential GND. A comparator 58 compares the voltage across this resistor 59 to the reference potential in order to provide the comparison signal S58. In the sample shown, the comparator signal S58 has a high level, in order to charge the capacitor 56 with the current furnished from the first current source 51, when the current metering signal S4 is larger than the first control signal S1. If the first control signal S1 is larger than the current metering signal S4, the capacitor 56 will be discharged across the discharge circuit 53, 54. A voltage V56 across the capacitor 56 is amplified by means of an amplifier 57, while the second control signal S5 is present at the output of this amplifier 57. Each of the currents delivered by the current sources 51, 53 are the same.

The mode of operation of this second control arrangement 5 depicted in Figure 6a is illustrated hereinbelow with reference to Figure 6b. Figure 6b shows, for the duration of an actuation period of the switch SW, the time variation of the current metering signal S4, as well as the variation of the voltage V56 across the capacitor 56, or the second control signal S5. The first control signal S1 in the sample embodiment is larger than the minimum value of the current metering signal S4 but smaller than the mean value S4m of the current metering signal S4. After the start of the actuation period, the capacitor 56 will at first be discharged until the current metering signal S4 reaches the value of the first control signal S1. The capacitor will discharge until such time as the value of the current metering signal S4 has again dropped below the value of the first control signal S1. In the sample embodiment depicted, where the first control signal S1 is smaller than the mean value of the triangular current metering signal S4, the charging time of the capacitor 56 is larger than the discharging time, so that at the end of the actuation period there results a higher instantaneous value for the second control signal S5.

With reference to Figures 4 and 5, a second rising control signal results in a diminishing difference signal S6, which results in a decreased mean current uptake, in order to bring the mean value S4m of the current metering signal S4 closer to the first control signal S1, until the adjusted state depicted in Figure 5 is achieved, at which the mean value S4m of the current metering signal corresponds to the first control signal S1. In this case, the charging time of the capacitor 56 corresponds to its discharging time, so that the value of the second control signal S5 at the start of an actuation period corresponds to the value at the end of the actuation period, which is equivalent to the mean value of the second control signal S5 remaining the same. In order to prevent the automatic control process being influenced by the fluctuations of the second control signal resulting from the charging and discharging of the capacitor 6 even in the adjusted state, a sample-and-hold element is preferably connected to the amplifier 57 in a way not otherwise specified, which samples the second control signal S5 each time in synchronization with the clock signal CLK, in order to hold the value of the control signal S5 constant for the next actuation period each time.

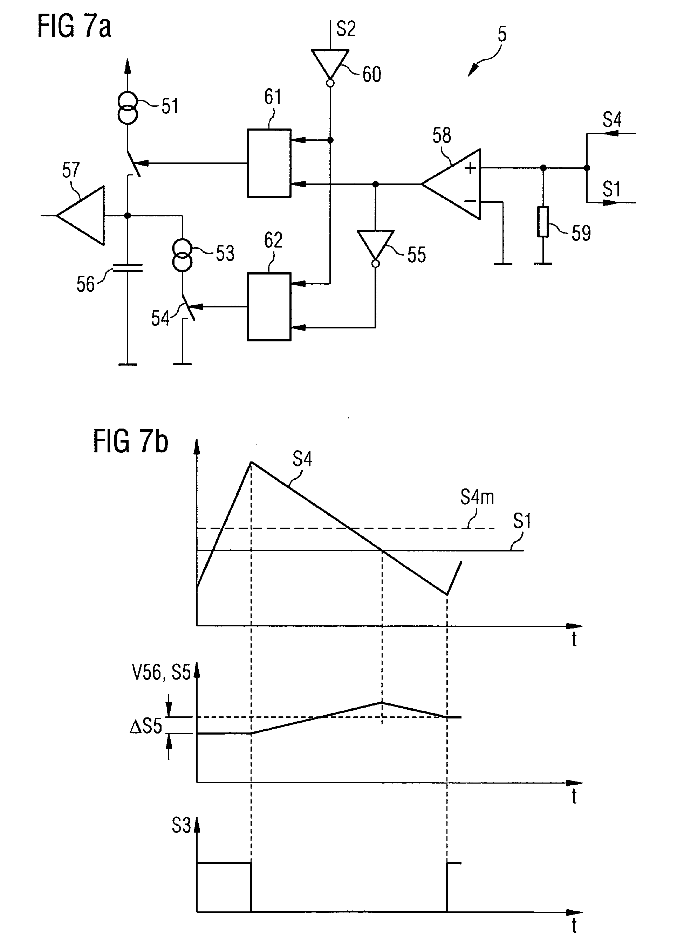

Figure 7a shows a modification of the second control arrangement depicted in Figure 6a. This control arrangement, shown in Figure 7a, contains a release circuit with AND gates 61, 62, to one input each of which is furnished the actuation signal S2 inverted by means of an inverter 60. To the other input of one of the gates 61 is furnished the comparison signal 58 and to the other input of the other gate 62 is furnished the inverted comparison signal. The outputs of the gates 61, 62 actuate the switches 52, 53 of the charging and discharging circuits. The release circuit 60, 61, 62 ensures that an evaluation of the current metering signal S4 in relation to the first control signal S1 only takes place during periods of time when the switch SW is turned off.

Figure 7b shows, for this control arrangement, the time variation of the second control signal S5 as a function of the current metering signal S4, the first control signal S1, and the actuation signal S3. Charging of the capacitor 56 in this sample embodiment only occurs during a falling edge of the current metering signal S4, thus, while the switch SW is shut off. The capacitor is charged until the current metering signal S4 is greater than the first control signal S1, and thereafter it is discharged. For the time that the switch is turned on, the second control signal S5 maintains a constant value.

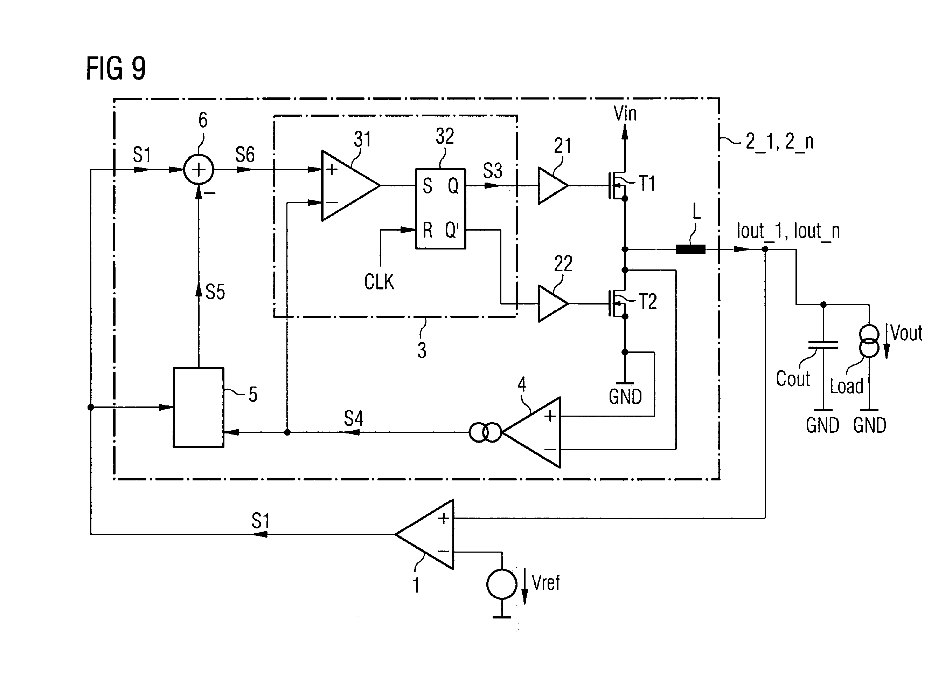

In this embodiment as well there is the possibility of connecting a sample-and-hold element to the amplifier 57, in order to keep constant the value of the second control signal S5 as determined during an actuation period in order to generate the actuation pulse during the following actuation period.Another sample embodiment of a second control arrangement is shown in Figure 8. This control arrangement contains a subtractor 63, to which the current metering signal S4 and the first control signal S1 are sent, and which provides a current signal S63, dependent on the difference between the current metering signal S4 and the first control signal S1, that is sent to the capacitor 56. The voltage V56 across the capacitor 56 increases for as long as the current metering signal S4 is larger than the first control signal S1, and it decreases when the first control signal S1 is larger than the current metering signal S4. The steepness with which the voltage increase or decrease occurs is dependent on the difference between the current metering signal S4 and the first control signal S1. The voltage V56 across the capacitor 56 is amplified by means of an amplifier 57, in order to provide the second control signal S5.

Figure 9 shows a modification of the transformer stage shown in Figure 4. In this transformer stage according to Figure 9, the first switch is configured as a MOSFET T1, to which the output signal S3 of the actuation circuit 3 is sent across a driver circuit 21. The free-wheeling element between the inductance L and reference potential GND is likewise formed by a MOSFET T2 in this sample embodiment, which is actuated in complementary fashion to the first switch T1. For this, the signal at the inverting output Q' of the RS flip-flop 32 is sent to this second MOSFET T2 across a driver circuit 22.

The current metering signal S4 in this sample embodiment is furnished by a measuring amplifier 4, whose input terminals are connected to the load pins of the second MOSFET T2, in order to detect, when the first MOSFET T1 is blocked, the free-wheeling current flowing across the second MOSFET T2, which corresponds to the output current Iout when the first MOSFET T1 is switched off. The second control arrangement 5 in this sample embodiment is preferably configured according to the control arrangement shown in Figure 7a, which only determines the second control signal S5 during shut-off periods of the first switch T1, controlling the current uptake.

### List of reference characters

- CLK: clock signal
- CLK1: clock signal
- Cout: output capacitor
- Cout1: output capacitor
- D: diode
- D1: diode
- ESR: parasitic resistance of the output capacitor
- GND1: reference potential
- Iout_1, iout_n: partial currents
- Iout1: output current
- K1, Kn: output terminals
- K10: output terminal
- L: inductance
- L1: inductance
- OUT: output terminal
- S1: first control signal
- S11: first control signal
- S21: actuation signal
- S31: comparator output signal
- S4: current metering signal
- S41: current metering signal
- S5: second control signal
- S58: comparator output signal
- S6: difference signal
- S63: subtractor output signal
- SW: switch
- SW10: switch
- T1, T2: transistors
- Vin: input potential,
input voltage
- Vin1: input potential,
input voltage
- Vout: output voltage
- Vout1: output potential,
output voltage
- Vref: reference voltage
- 1: first control arrangement
- 3: pulse width modulator
- 2_1, 2_n: transformer stage
- 4: measuring amplifier
- 5: second control arrangement
- 6: subtractor
- 11: controller
- 21: actuation circuit
- 31: comparator
- 31: transformer stage
- 32: RS flip-flop
- 41: current metering arrangement
- 41: current metering arrangement
- 55: inverter
- 56: capacitor
- 57: output amplifier
- 58: comparator
- 59: resistor
- 60: inverter
- 63: subtractor
- 51, 53: current source
- 52, 54: switch
- 61, 62: AND gates

## Claims

1. Method for actuating a switch (SW; T1) regulating the current uptake in one of at least two parallel switch transformer stages (3, 3_1, 3_n) of a multiphase DC voltage transformer, which has an output terminal for connecting a load and producing an output voltage (Vout) from an input voltage (Vin), wherein the method comprises the following steps:
- providing a first control signal (S1), dependent on the output voltage (Vout),
- providing a current metering signal (S4) at least temporarily dependent on an output current (Iout) of the transformer stage (3),
- providing a clocked actuation signal (S3) having a sequence of actuation pulses for the at least one switch (SW; T1), whose duty cycle is controlled to a value depending on the first control signal (S1) and the current metering signal (S4), at which the mean value of the output current (Iout) is proportional to the first control signal (S1).

2. Method according to Claim 1, in which the duty cycle of the actuation signal (S3) is controlled to a value depending on the first control signal (S1) and the current metering signal (S4), at which the mean value (S4m) of the current control signal (54) corresponds to the first control signal (S1).

3. Method according to Claim 2, in which the duty cycle of the actuation signal (S3) is adjusted depending on a difference signal (S6) from the first control signal (S1) and a second control signal (S5) and the current metering signal (S4), wherein the second control signal (S5) is formed depending on a difference of the first control signal (S1) and the current metering signal (S4).

4. Method according to Claim 3, in which the production of the second control signal (S5) entails the integration of the difference formed from the first control signal (S1) and current metering signal (S4) at least during a predetermined time segment of an actuation period of the actuation signal (S3).

5. Method according to Claim 3, in which the production of the second control signal entails the integration of a signal (I1) with constant amplitude and a sign depending on a comparison of the first control signal (S1) and the current metering signal (S4) at least during a predetermined time segment of an actuation period of the actuation signal (S3).

6. Method according to one of Claims 3 to 5, in which the production of the actuation signal (S3) involves the following steps:
- Producing a first level of the actuation signal (S3) timed by a clock signal (CLK) and
- then producing a second level of the actuation signal when the current metering signal (S4) attains the difference signal (S6).

7. Multiphase DC voltage transformer with an output terminal (OUT)for producing an output voltage (Vout) from an input voltage (Vin), a first controller for producing a first control signal (S1) depending on the output voltage, and at least two transformer stages (2_1, 2_n) that are connected in parallel with each other to the output terminal (OUT) and that have the following features:
- an inductive energy storage element (L1) coupled to the output terminal (OUT),
- a switch (SW; T1) controlling the current uptake of the inductive energy storage element (L1), which is actuated according to an actuation signal (S2),
- a current metering arrangement (4) for producing a current metering signal depending on an output current (Iout),
- an actuation circuit (3, 7) to which the first control signal (S1) and the current metering signal (S4) are sent and which furnishes the actuation signal (S3) for the at least one switch (SW; T1), wherein the actuation circuit (3, 7) controls the duty cycle of the actuation signal (S3) to a value at which the mean value of the output current (Iout) is proportional to the first control signal (S1).

8. Multiphase DC voltage transformer according to Claim 7, in which the actuation circuit (3, 5, 6) controls the duty cycle of the actuation signal (S3) to a value at which the mean value (S4m) of the current metering signal (S4) corresponds to the first control signal (S1).

9. Multiphase DC voltage transformer according to Claim 7 or 8 in which the actuation circuit (3, 5, 6) has the following features:
- a pulse width modulator (5), to which the current metering signal (S4) and a difference signal (S6) from the first control signal (S1) and a second control signal (S5) is sent,
- a second control arrangement, to which the first control signal (S1) and the current metering signal (S4) are sent and which furnishes the second control signal depending on a difference of the first control signal (S1) and the current metering signal (S4),
- a subtractor (6), which produces the difference signal (S6) from the first control signal (S1) and the second control signal.

10. Multiphase DC voltage transformer according to Claim 9, in which the second control arrangement (5) has the following features:
- a comparator arrangement (58, 59), to which the first control signal (S1) and the current metering signal (S4) are sent and which produces a comparator signal (S58) depending on a comparison of these two signals (S1, S4),
- a capacitive storage element (56),
- a charging circuit (51, 52) and a discharging circuit (53, 54), each of which are coupled to the capacitive storage element (56) and which are actuated in complementary fashion according to the comparator signal (S58), to charge or to discharge the capacitive storage element (56).

11. Multiphase DC voltage transformer according to Claim 10, in which the second control arrangement has a release circuit (60, 61, 62), which releases the charging and discharging circuit (51-54) only during turn-on times or turn-off times of the at least one switch (SW; T1) for the charging or discharging of the capacitive storage element (56).

12. Multiphase DC voltage transformer according to Claim 9, in which the second control arrangement (5) has the following features:
- a subtractor arrangement (63), to which the first control signal (S1) and the current metering signal (S4) are sent and which produces a current (S63) depending on a difference of these two signals (S1, S4),
- a capacitive storage element (56), to which a current (S63) depending on the difference of the two signals (S1, S4) is sent.
